# EUROPEAN PATENT APPLICATION

(11) **EP 4 617 514 A1**
(43) Date of publication of application: **17.09.2025**
(21) Application number: 25161617.3
(22) Date of filing: 04.03.2025
(51) Int. Cl.: F16B 31/02, F16B 5/02, F16B 37/14, F16B 37/04

(54) **FASTENER SYSTEMS AND METHODS FOR JOINING MULTIPLE SUBSTRATES OF WORKPIECES HAVING WORKING AND BLIND SIDES**

(30) Priority: 15.03.2024 US 202418606712
(71) Applicant: The Boeing Company, Arlington, VA 22202 (US)
(72) Inventor: SIMPSON, Blake A., Arlington, 22202 (US); SISCO, Farahnaz, Arlington, 22202 (US); MUNTZ, Nathan A., Arlington, 22202 (US)
(74) Representative: Morrall, Jonathan Ian McLachlan

(57) **Abstract**

A core bolt of a fastener system for joining multiple substrates of a workpiece with a working side and a blind side is provided. The core bolt includes a head portion, a shank portion and a frangible drive element. The head portion includes a recessed torquing feature. The shank portion opposes the recessed torquing feature and extends from the head portion along a longitudinal axis to a distal end. The shank portion includes a threaded portion between the distal end and the head portion. The frangible drive element extends from recessed torquing feature and protrudes outward along the longitudinal axis to define a proximal end. A fastener system for joining multiple substrates of the workpiece includes a nut member and the core bolt. Methods for joining multiple substrates of a workpiece with a working side and a blind side are also provided.

## Description

### FIELD

The present disclosure relates generally to blind fastener systems and, particularly, to core bolts for such systems and methods for joining multiple substrates of a workpiece with working and blind sides.

### BACKGROUND

Future airplane wing box architectures are getting smaller, which generates confined space and the need for different fastening systems that enable assembly from the outer mold line of the wing (e.g., skin/shear ties and skin/spar). Traditional fastener styles with an external wrenching feature require a torque wrench for installation and break off flush with the fastener head. Additionally, these fasteners cannot be removed after installation without drilling out the fastener head.

Accordingly, those skilled in the art continue with research and development efforts to improve one-sided fastener systems for joining multiple substrates.

### SUMMARY

Disclosed are examples of core bolts, fastener systems and methods for joining multiple substrates of workpieces with working and blind sides. The following is a non-exhaustive list of examples, which may or may not be claimed, of the subject matter according to the present disclosure.

In an example, a core bolt of a fastener system for joining multiple substrates of a workpiece with a working side and a blind side is disclosed. The disclosed core bolt includes a head portion, a shank portion and a frangible drive element. The head portion includes a recessed torquing feature. The shank portion axially extends from the head portion along a central longitudinal axis to a distal end of the core bolt. The shank portion includes a threaded portion between the distal end and the head portion. The frangible drive element extends from recessed torquing feature of the head portion and protrudes outward along the central longitudinal axis to define a proximal end of the core bolt.

In an example, a fastener system for joining multiple substrates of a workpiece with a working side and a blind side is disclosed. The disclosed fastener system includes a nut member and a core bolt. The nut member includes a nut bore with internal threads. The core bolt includes a head portion, a shank portion and a frangible drive element. The head portion includes a recessed torquing feature. The shank portion axially extends from the head portion along a central longitudinal axis to a distal end of the core bolt. The shank portion includes a threaded portion between the distal end and the head portion. The frangible drive element extends from the head portion and protrudes outward along the central longitudinal axis to define a proximal end of the core bolt.

In an example, a method for joining multiple substrates of a workpiece with a working side and a blind side is disclosed. The disclosed method includes: (i) securing a nut member over a joining bore through the multiple substrates on the blind side of the workpiece, the nut member including a nut bore with internal threads; (ii) inserting a core bolt in the joining bore from the working side of the workpiece until a distal end of the core bolt contacts the nut member, the core bolt including a head portion with a recessed torquing feature and a shank portion axially extending from the head portion along a central longitudinal axis to a distal end of the core bolt, the shank portion including a threaded portion between the distal end and the head portion, the core bolt also includes a frangible drive element extending from the head portion and protruding outward along the central longitudinal axis to define a proximal end of the core bolt; (iv) rotating the core bolt to engage the threaded portion with the internal threads of the nut member; and (v) further rotating the core bolt for further engagement with the nut member until the frangible drive element separates from the core bolt to achieve installation.

Other examples of the disclosed core bolts, fastener systems and methods for joining multiple substrates of workpieces with working and blind sides will become apparent from the following detailed description, the accompanying drawings and the appended claims.

### BRIEF DESCRIPTION OF THE DRAWINGS

Fig. 1A is a side view of an example of a core bolt for a fastener system for joining multiple substrates of a workpiece with working and blind sides;
Fig. 1B is a top view of the core bolt of Fig. 1A;
Fig. 1C is a closeup side view of an example of an interface between a frangible drive element and a head portion of the core bolt of Fig. 1A;
Fig. 2A is a side view of the core bolt of Fig. 1A after the frangible drive element separates from the core head;
Fig. 2B is a top view of the core bolt of Fig. 1A after separation of the frangible drive element;
Fig. 2C is a side view of an example of the frangible drive element of Fig. 1A after separation from the head portion;
Fig. 3A is a side view of another example of a core bolt for a fastener system for joining multiple substrates of a workpiece with working and blind sides;
Fig. 3B is a side view of yet another example of a core bolt for a fastener system for joining multiple substrates of a workpiece with working and blind sides;
Fig. 4A is a side view of still another example of a core bolt for a fastener system for joining multiple substrates of a workpiece with working and blind sides;
Fig. 4B is a top view of the core bolt of Fig. 4A;

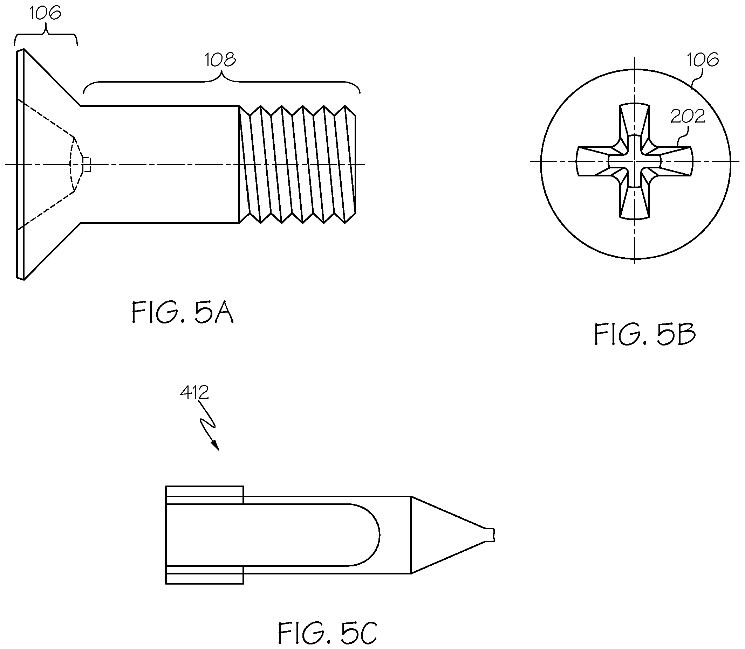

Fig. 5A is a side view of the core bolt of Fig. 4A after a frangible drive element of the core bolt separates from a core head;
Fig. 5B is a top view of the core bolt of Fig. 4A showing the core head after separation of the frangible drive element;
Fig. 5C is a side view of an example of the frangible drive element of Fig. 4A after separation from the head portion;
Fig. 6 is a cross-sectional side view of an example of a fastener system for joining multiple substrates of a workpiece with working and blind sides;
Fig. 7A is a cross-sectional side view of an example of a joining bore through the multiple substrates of the workpiece with a countersink on the working side;
Fig. 7B is a cross-sectional side view of another example of a joining bore through the multiple substrates of the workpiece with a counterbore on the working side;
Fig. 7C is a cross-sectional side view of yet another example of a joining bore through the multiple substrates of the workpiece;
Fig. 8 is a cross-sectional side view of another example of a fastener system for joining multiple substrates of a workpiece with working and blind sides;
Fig. 9 is a flow diagram of an example of a method for joining multiple substrates of a workpiece with working and blind sides;
Fig. 10 is a flow diagram of an example of the securing of the nut member of Fig. 9;
Fig. 11 is a flow diagram of examples of the rotating of the core bolt and the further rotating of the core bolt of Fig. 9;
Fig. 12 is a flow diagram of additional examples of the rotating of the core bolt and the further rotating of the core bolt of Fig. 9;
Fig. 13 is a flow diagram of further additional examples of the rotating of the core bolt and the further rotating of the core bolt of Fig. 9;
Fig. 14, in combination with Fig. 9, is a flow diagram of another example of a method for joining multiple substrates of a workpiece with working and blind sides;
Fig. 15, in combination with Fig. 9, is a flow diagram of yet another example of a method for joining multiple substrates of a workpiece with working and blind sides;
Fig. 16 is a block diagram of aircraft production and service methodology that implements one or more of the examples of methods for joining multiple substrates of a workpiece with working and blind sides disclosed herein; and
Fig. 17 is a schematic illustration of an aircraft that incorporates workpieces with multiple substrates that are joined using one or more of the examples of core bolt assemblies, blind fastener systems and methods for joining multiple substrates of a workpiece with working and blind sides disclosed herein.

### DETAILED DESCRIPTION

The various examples of core bolts, fastener systems and methods for joining multiple substrates of workpieces with working and blind sides disclosed herein provide a fastener with a recessed head and a frangible drive element that breaks sub-flush of the fastener head such that the fastener can be removed manually with a torque wrench to enable a one-sided removable bolt. The disclosure is directed to a fastening system that combines an external wrench/drive element with torque break-off and a broached (head side) recess in the same fastener. The external drive feature protrudes out from the recess and breaks off sub-flush to the top of the fastener after initial installation. This allows the recess to be used to remove the fastener after the drive feature has been removed.

No post-installation flushness shave is needed. The external wrench/drive element feature enables automation to install fasteners without having a calibrated torque tool. The broached (head side) recess allows the fastener to be removed post installation for rework or repair.

The various examples of core bolts with external drive elements allow the fastener to b torqued to a predetermined amount. The external drive element breaks off when the predetermined torque is reached. The various examples of core bolts also incorporate a broached recess so that the fastener can be removed after installation.

The various examples of disclosed core bolts, fastener systems and methods for joining multiple substrates of workpieces with working and blind sides incorporate a broach drive element and an external wrenching feature that breaks off at a desired load. This combines the benefit of both types of features in the same fastener. Alone these features have certain drawbacks. For example, the broached recess fastener style requires a torque wrench for installation. Whereas the external wrenching feature that shears/breaks off at a predetermined load leaves bolts that can be removed easily after installation. For example, the retained bolt must be drilled out or the head must be sheared off.

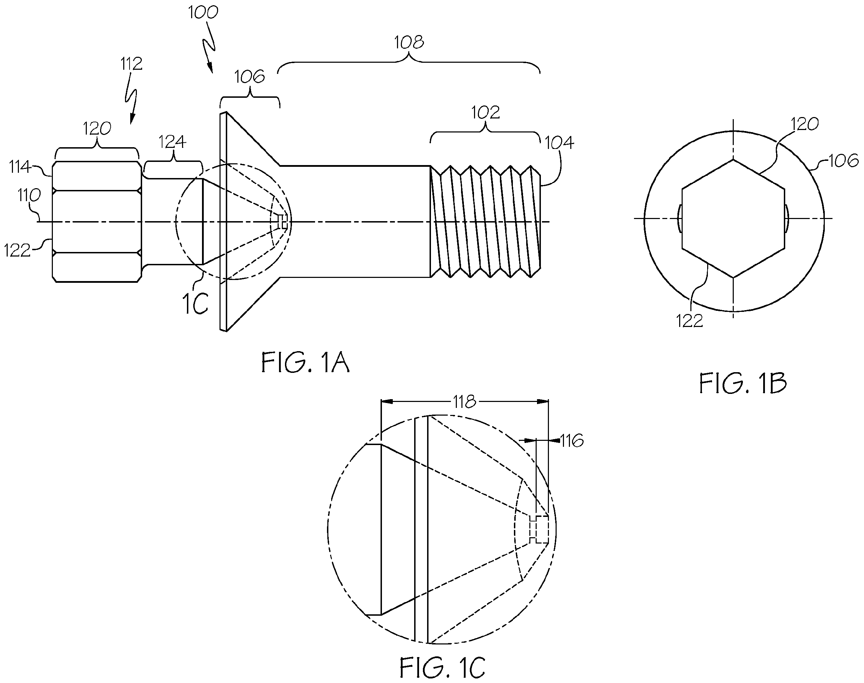

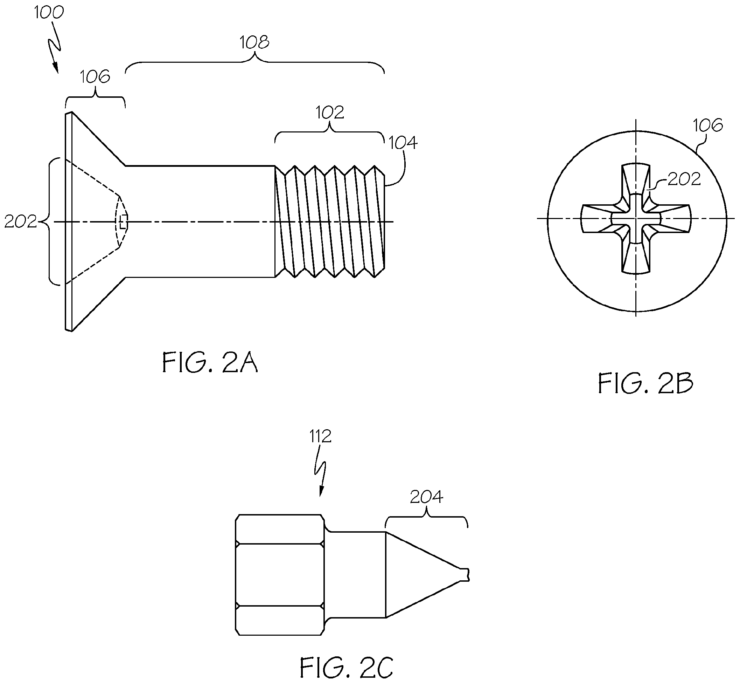

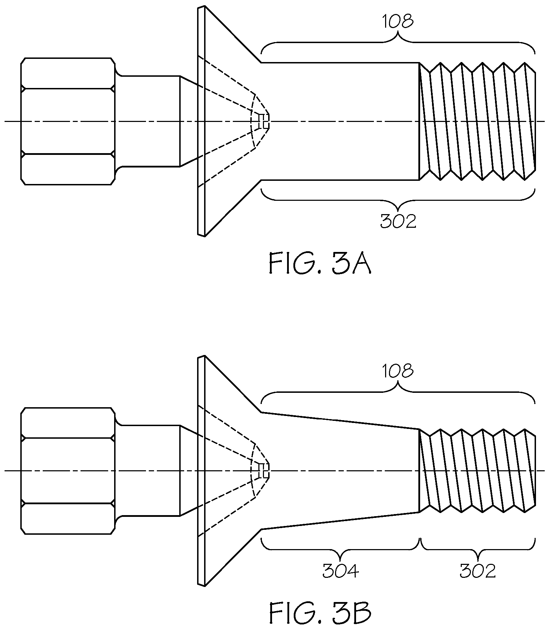

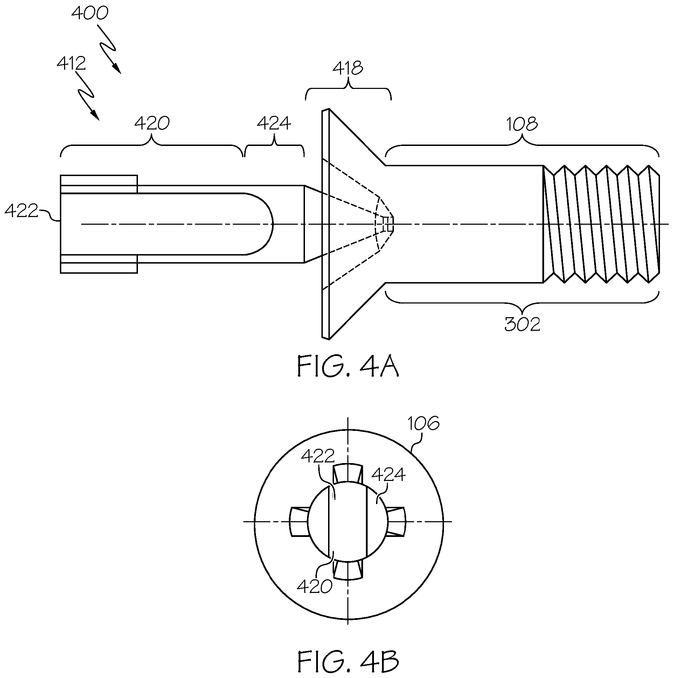

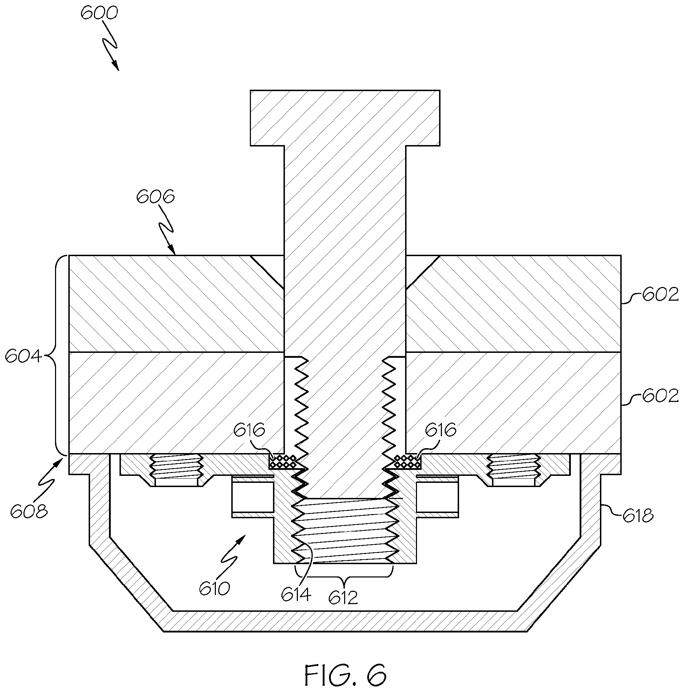

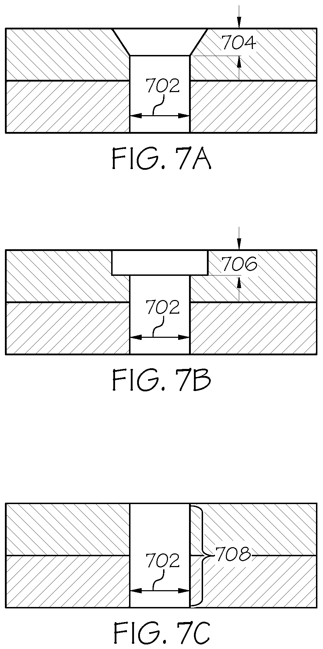

Referring generally to Figs. 1A-C, 2A-C, 3A-B, 4A-B, 6 and 7A-C, by way of examples, the present disclosure is directed to a core bolt 100, 400 of a fastener system 600, 800 for joining multiple substrates 602 of a workpiece 604 with a working side 606 and a blind side 608. Fig. 1A shows an example of a core bolt for a fastener system for joining multiple substrates of a workpiece with working and blind sides. Fig. 1B shows a top view of the core bolt of Fig. 1A. Fig. 1C shows an example of an interface between a frangible drive element and a head portion of the core bolt of Fig. 1A. Fig. 2A shows a side view of the core bolt of Fig. 1A after the frangible drive element separates from the core head. Fig. 2B shows a top view of the core bolt of Fig. 1A after separation of the frangible drive element. Fig. 2C shows an example of the frangible drive element of Fig. 1A after separation from the head portion. Fig. 3A shows another example of a core bolt for a fastener system for joining multiple substrates of a workpiece with working and blind sides. Fig. 3B shows yet another example of a core bolt for a fastener system for joining multiple substrates of a workpiece with working and blind sides. Fig. 4A shows still another example of a core bolt for a fastener system for joining multiple substrates of a workpiece with working and blind sides. Fig. 4B shows a top view of the core bolt of Fig. 4A. Fig. 6 shows an example of a fastener system for joining multiple substrates of a workpiece with working and blind sides. Fig. 7A shows an example of a joining bore through the multiple substrates of the workpiece with a countersink on the working side. Fig. 7B shows another example of a joining bore through the multiple substrates of the workpiece with a counterbore on the working side. Fig. 7C shows yet another example of a joining bore through the multiple substrates of the workpiece.

With reference again to Figs. 1A-C, 1A-C, 3A-B, 4A-B, 6 and 7A-C, in one or more examples, a core bolt 100, 400 of a fastener system 600, 800 for joining multiple substrates 602 of a workpiece 604 with a working side 606 and a blind side 608 is disclosed. The core bolt includes a head portion 106, a shank portion 108 and a frangible drive element 112, 412. The head portion 106 includes a recessed torquing feature 202. The shank portion 108 axially extends from the head portion 106 along a central longitudinal axis 110 to a distal end 104 of the core bolt 100, 400. The shank portion 108 includes a threaded portion 102 between the distal end 104 and the head portion 106. The frangible drive element 112, 412 extends from recessed torquing feature 202 of the head portion 106 and protrudes outward along the central longitudinal axis 110 to define a proximal end 114 of the core bolt 100, 400.

In another example of the core bolt 100, 400, the core bolt 100, 400 includes a metallic material. In a further example, the metallic material includes a stainless steel, titanium, a titanium alloy, a cobalt-chromium alloy, a nickel-titanium alloy or any other suitable metallic material in any suitable combination. In yet another example of the core bolt 100, 400, the head portion 106 includes a flush head, a countersunk head, a protruding head, a raised head or any other suitable type of head in any suitable combination. In still another example of the core bolt 100, 400, the recessed torquing feature 202 of the head portion 106 includes a recessed offset cruciform drive feature, a recessed dovetail drive feature, a recessed cross-tip drive feature, a recessed hexagon key drive feature, a recessed flat tip drive feature or any other suitable type of recessed torquing feature in any suitable combination.

In still yet another example of the core bolt 100, 400, after the frangible drive element 112, 412 separates from the from head portion 106, the recessed torquing feature 202 of the head portion 106 facilitates rotation of the core bolt 100, 400 using an offset cruciform drive torquing tool, a dovetail drive torquing tool, a cross-tip drive torquing tool, a hexagon key torquing tool, a flat tip drive torquing tool or any other suitable tool in any suitable combination. In another example of the core bolt 100, 400, the shank portion 108 opposes the recessed torquing feature 202 of the head portion 106. In yet another example of the core bolt 100, 400, the shank portion 108 includes a cylindrical body 302, a frustoconical body 304 or any other suitable shaped body in any suitable combination. In still another example of the core bolt 100, 400, the frangible drive element 112, 412 extends from the head portion 106 at a central base area 116 of the recessed torquing feature 202 and is configured for engagement by a tool for installation of the core bolt 100, 400. In a further example, the tool includes an end effector on a robotic arm, a handheld power tool, a hand tool or any other suitable tool in any suitable combination.

In another further example, the frangible drive element 112, 412 is separable from the head portion 106 at the central base area 116 of the recessed torquing feature 202 in response to a predetermined torque being applied by the tool during the installation of the core bolt 100, 400. In an even further example, the predetermined torque is based at least in part on a diameter of the core bolt 100, 400, a finish coat on internal threads 614 of a nut member 610 into which the core bolt 100, 400 is to be installed, a friction level for the internal threads 614 of the nut member 610, a friction level between the shank portion 108 of the core bolt 100, 400 and a joining bore 702 through the multiple substrates 602 into which the core bolt 100, 400 is to be installed, a friction level between the shank portion 108 of the core bolt 100, 400 and a sleeve member 802 into which the core bolt 100, 400 is to be inserted, an effect of lubricants on frictions encountered by the core bolt 100, 400 during installation, a preload tension within the core bolt 100, 400 at the proximal end 114 of the frangible drive element 112, 412 or any other suitable characteristic of the fastener system in any suitable combination.

In still yet another example of the core bolt 100, 400, the frangible drive element 112, 412 includes an interface portion 118, 418, a torquing portion 120, 420 and a stem portion 124, 424. The interface portion 118, 418 extends from the head portion 106 and protrudes outward. The torquing portion 120, 420 includes a rotation feature 122, 422 at the proximal end 114 of the core bolt 100, 400. The stem portion 124, 424 axially extending between the interface portion 118, 418 and the torquing portion 120, 420 along the central longitudinal axis 110 of the core bolt 100, 400. In a further example, the interface portion 118, 418 of the frangible drive element 112, 412 extends from the head portion 106 at a central base area 116 of the recessed torquing feature 202.

In another further example, the rotation feature 122, 422 of the torquing portion 120, 420 includes a recessed spline drive feature, a recessed star drive feature, a recessed square-lobed star drive feature, a recessed 6-point star drive feature, a recessed 6-point square-lobed star drive feature, an opposing flat surface head feature, a recessed hexagon key drive feature, a hexagon head feature, a recessed cross-tip drive feature, a recessed flat tip drive feature or any other suitable rotation feature in any suitable combination. In yet another further example, the rotation feature 122, 422 of the torquing portion 120, 420 facilitates rotation of the core bolt 100, 400 using a spline drive torquing tool, a star drive torquing tool, a square-lobed star drive torquing tool, a 6-point star drive torquing tool, a 6-point square-lobed star drive torquing tool, an opposing flat surface socket torquing tool, a hexagon key torquing tool, a hexagon socket torquing tool, a cross-tip drive torquing tool, a flat tip drive torquing tool or any other suitable tool in any suitable combination.

In still another further example, the stem portion 124, 424 opposes the rotation feature 122, 422 of the torquing portion 120, 420. In still yet another further example, the stem portion 124, 424 includes an elongated cylindrical shape, an elongated hexagonal shape, an elongated shape with multiple facets or any other suitable shape in any suitable combination. In another further example of the frangible drive element 112, 412, the interface portion 118, 418 defines a breakneck groove 126 disposed proximate the head portion 106 at a central base area 116 of the recessed torquing feature 202 to facilitate separation of the frangible drive element 112, 412 from the core bolt 100, 400 in response to a predetermined torque being applied at the torquing portion 120, 420 during installation of the core bolt 100, 400.

In yet another example of the frangible drive element 112, 412, the interface portion 118, 418 includes an interface body 204 that tapers from the stem portion 124, 424 to the head portion 106 at a central base area 116 of the recessed torquing feature 202 to facilitate separation of the frangible drive element 112, 412 from the core bolt 100, 400 in response to a predetermined torque being applied at the torquing portion 120, 420 during installation of the core bolt 100, 400. In an even further example of the frangible drive element 112, 412, the interface body 204 defines a breakneck groove 126 disposed proximate the head portion 106 at the central base area 116 of the recessed torquing feature 202 to further facilitate separation of the frangible drive element 112, 412 from the core bolt 100, 400 in response to the predetermined torque being applied at the torquing portion 120, 420 during the installation of the core bolt 100, 400.

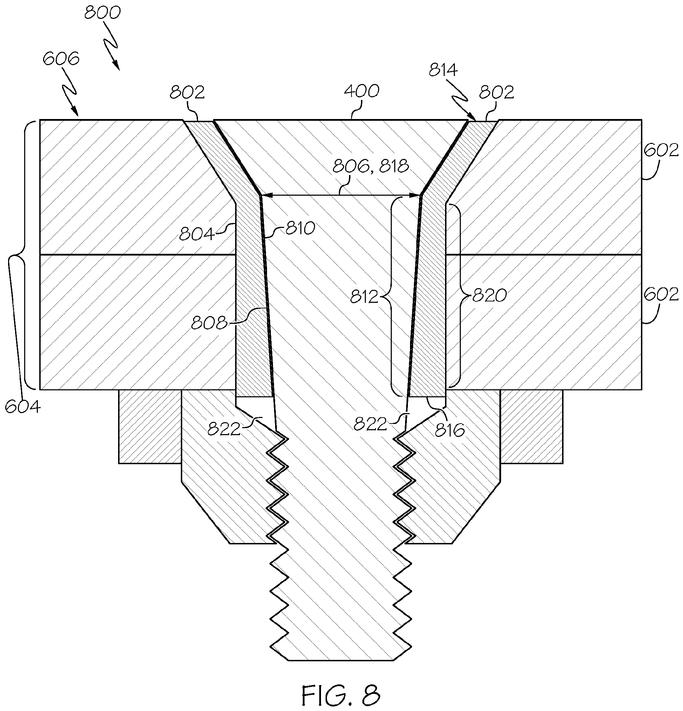

Referring generally to Figs. 1A-C, 2A-C, 3A-B, 4A-B, 6,7A-C and 8, by way of examples, the present disclosure is directed to a fastener system 600, 800 for joining multiple substrates 602 of a workpiece 604 with a working side 606 and a blind side 608. Fig. 1A shows an example of a core bolt for a fastener system for joining multiple substrates of a workpiece with working and blind sides. Fig. 1B shows a top view of the core bolt of Fig. 1A. Fig. 1C shows an example of an interface between a frangible drive element and a head portion of the core bolt of Fig. 1A. Fig. 2A shows a side view of the core bolt of Fig. 1A after the frangible drive element separates from the core head. Fig. 2B shows a top view of the core bolt of Fig. 1A after separation of the frangible drive element. Fig. 2C shows an example of the frangible drive element of Fig. 1A after separation from the head portion. Fig. 3A shows another example of a core bolt for a fastener system for joining multiple substrates of a workpiece with working and blind sides. Fig. 3B shows yet another example of a core bolt for a fastener system for joining multiple substrates of a workpiece with working and blind sides. Fig. 4A shows still another example of a core bolt for a fastener system for joining multiple substrates of a workpiece with working and blind sides. Fig. 4B shows a top view of the core bolt of Fig. 4A. Fig. 6 shows an example of a fastener system for joining multiple substrates of a workpiece with working and blind sides. Fig. 7A shows an example of a joining bore through the multiple substrates of the workpiece with a countersink on the working side. Fig. 7B shows another example of a joining bore through the multiple substrates of the workpiece with a counterbore on the working side. Fig. 7C shows yet another example of a joining bore through the multiple substrates of the workpiece. Fig. 8 shows another example of a fastener system for joining multiple substrates of a workpiece with working and blind sides.

With reference again to Figs. 1A-C, 2A-C, 3A-B, 4A-B, 6 ,7A-C and 8, in one or more examples, a fastener system 600, 800 for joining multiple substrates 602 of a workpiece 604 with a working side 606 and a blind side 608 is disclosed. The fastener system includes a nut member 610 and a core bolt 100,400. The nut member 610 includes a nut bore 612 with internal threads 614. The core bolt 100, 400 includes a head portion 106, a shank portion 108 and a frangible drive element 112, 412. The head portion 106 includes a recessed torquing feature 202. The shank portion 108 axially extends from the head portion 106 along a central longitudinal axis 110 to a distal end 104 of the core bolt 100, 400. The shank portion 108 includes a threaded portion 102 between the distal end 104 and the head portion 106. The frangible drive element 112, 412 extends from the head portion 106 and protrudes outward along the central longitudinal axis 110 to define a proximal end 114 of the core bolt 100, 400. In another example of the fastener system 600, 800, the multiple substrates 602 includes at least one composite material substrate. In yet another example of the fastener system 600, 800, at the working side 606 of the workpiece 604, a joining bore 702 through the multiple substrates 602 includes a countersunk portion 704, a counterbored portion 706, a cylindrical portion 708 or any other suitable shaped portion in any suitable combination.

In still another example of the fastener system 600, 800, the nut member 610 is configured for placement of the nut bore 612 over a joining bore 702 through the multiple substrates 602 on the blind side 608 of the workpiece 604. In still yet another example of the fastener system 600, 800, the nut member 610 is configured to be secured to the blind side 608 of the workpiece 604. In a further example, the nut member 610 is configured to be secured using mechanical fasteners, a nut plate, a swaged retaining mechanism, an adhesive bonding material, a gang channel or any other suitable securing technique in any suitable combination. In another example of the fastener system 600, 800, the core bolt 100, 400 is configured for insertion in a joining bore 702 through the multiple substrates 602 from the working side 606 of the workpiece 604. In yet another example of the fastener system 600, 800, the threaded portion 102 of the shank portion 108 of the core bolt 100, 400 is configured for threaded engagement with the internal threads 614 of the nut member 610.

In still another example of the fastener system 600, 800, the head portion 106 of the core bolt 100, 400 includes a flush head, a countersunk head, a protruding head, a raised head or any other suitable type of head in any suitable combination.

In still yet another example of the fastener system 600, 800, the recessed torquing feature 202 on the head portion 106 of the core bolt 100, 400 includes a recessed offset cruciform drive feature, a recessed dovetail drive feature, a recessed cross-tip drive feature, a recessed hexagon key drive feature, a recessed flat tip drive feature or any other recessed torquing feature in any suitable combination. In yet another example of the fastener system 600, 800, after the frangible drive element 112, 412 of the core bolt 100, 400 separates from the from head portion 106, the recessed torquing feature 202 of the head portion 106 facilitates rotation of the core bolt 100, 400 using at least one of an offset cruciform drive torquing tool, a dovetail drive torquing tool, a cross-tip drive torquing tool, a hexagon key torquing tool, a flat tip drive torquing tool or any other suitable tool in any suitable combination.

In still another example of the fastener system 600, 800, the shank portion 108 of the core bolt 100, 400 opposes the recessed torquing feature 202 of the head portion 106. In still yet another example of the fastener system 600, 800, the shank portion 108 of the core bolt 100, 400 includes a cylindrical body 302, a frustoconical body 304 or any other suitable shaped body in any suitable combination.

In yet another example of the fastener system 600, 800, the frangible drive element 112, 412 of the core bolt 100, 400 extends from the head portion 106 at a central base area 116 of the recessed torquing feature 202 and is configured for engagement by a tool for installation of the core bolt 100, 400. In a further example, the tool includes an end effector on a robotic arm, a handheld power tool, a hand tool or any other suitable tool in any suitable combination. In another further example, the frangible drive element 112, 412 is separable from the head portion 106 at the central base area 116 of the recessed torquing feature 202 in response to a predetermined torque being applied by the tool during the installation of the core bolt 100, 400. In still another example of the fastener system 600, 800, the frangible drive element 112, 412 of the core bolt 100, 400 includes an interface portion 118, 418, a torquing portion 120, 420 and a stem portion 124, 424. The interface portion 118, 418 extends from the head portion 106 and protrudes outward. The torquing portion 120, 420 includes a rotation feature 122, 422 at the proximal end 114 of the core bolt 100, 400. The stem portion 124, 424 axially extends between the interface portion 118, 418 and the torquing portion 120, 420 along the central longitudinal axis 110 of the core bolt 100, 400.

In a further example, the interface portion 118, 418 of the frangible drive element 112, 412 extends from the head portion 106 at a central base area 116 of the recessed torquing feature 202. In another further example, the rotation feature 122, 422 of the torquing portion 120, 420 includes a recessed spline drive feature, a recessed star drive feature, a recessed square-lobed star drive feature, a recessed 6-point star drive feature, a recessed 6-point square-lobed star drive feature, an opposing flat surface head feature, a recessed hexagon key drive feature, a hexagon head feature, a recessed cross-tip drive feature, a recessed flat tip drive feature and any other suitable rotation feature in any suitable combination.

In yet another further example, the rotation feature 122, 422 of the torquing portion 120, 420 facilitates rotation of the core bolt 100, 400 using a spline drive torquing tool, a star drive torquing tool, a square-lobed star drive torquing tool, a 6-point star drive torquing tool, a 6-point square-lobed star drive torquing tool, an opposing flat surface socket torquing tool, a hexagon key torquing tool, a hexagon socket torquing tool, a cross-tip drive torquing tool, a flat tip drive torquing tool or any other suitable tool in any suitable combination. In still another further example, the stem portion 124, 424 of the frangible drive element 112, 412 opposes the rotation feature 122, 422 of the torquing portion 120, 420. In still yet another further example, the stem portion 124, 424 of the frangible drive element 112, 412 includes an elongated cylindrical shape, an elongated hexagonal shape, an elongated shape with multiple facets or any other suitable shape in any suitable combination.

In another further example of the fastener system 600, 800, the interface portion 118, 418 of the frangible drive element 112, 412 defines a breakneck groove 126 disposed proximate the head portion 106 at a central base area 116 of the recessed torquing feature 202 to facilitate separation of the frangible drive element 112, 412 from the core bolt 100, 400 in response to a predetermined torque being applied at the torquing portion 120, 420 during installation of the core bolt 100, 400. In another further example of the fastener system 600, 800, the interface portion 118, 418 of the frangible drive element 112, 412 includes an interface body 204 that tapers from the stem portion 124, 424 to the head portion 106 at a central base area 116 of the recessed torquing feature 202 to facilitate separation of the frangible drive element 112, 412 from the core bolt 100, 400 in response to a predetermined torque being applied at the torquing portion 120, 420 during installation of the core bolt 100, 400. In an even further example of the fastener system 600, 800, the interface body 204 defines a breakneck groove 126 disposed proximate the head portion 106 at the central base area 116 of the recessed torquing feature 202 to further facilitate separation of the frangible drive element 112, 412 from the core bolt 100, 400 in response to the predetermined torque being applied at the torquing portion 120, 420 during the installation of the core bolt 100, 400.

In still yet another example, the fastener system 600, 800 also includes a sleeve member 802 having an outer sleeve surface 804 with a lubricious coating. The sleeve member 802 configured for insertion in a joining bore 702 through the multiple substrates 602 from the working side 606 of the workpiece 604. The core bolt 100, 400 configured for insertion in a central bore 806 of the sleeve member 802. In a further example, the lubricious coating on the outer sleeve surface 804 of the sleeve member 802 includes conductive features configured to provide electromagnetic energy protection to the workpiece 604. In another further example, the outer sleeve surface 804 of the sleeve member 802 is coated with a conductive coating to provide electromagnetic energy protection to the workpiece 604.

In yet another further example of the fastener system 600, 800, the sleeve member 802 also includes an inner sleeve surface 808 and the shank portion 108 of the core bolt 100, 400 includes an outer shank surface 810. At least one of the inner sleeve surface 808 and the outer shank surface 810 is coated with the lubricious coating. In still another further example of the fastener system 600, 800, the sleeve member 802 also includes an elongated sleeve body 812 defining the central bore 806. The elongated sleeve body 812 includes the outer sleeve surface 804, an inner sleeve surface 808 facing the central bore 806, a first end 814 relating to the working side 606 of the workpiece (604) and a second end 816 relating to the blind side 608 of the workpiece 604. At least the inner sleeve surface 808 is tapered from a larger inner sleeve diameter proximate the first end 814 to a smaller inner sleeve diameter proximate the second end 816 such that the central bore 806 includes a frustoconical sleeve bore 818. In an even further example, the outer sleeve surface 804 of the sleeve member 802 is cylindrical such that the elongated sleeve body 812 includes a cylindrical sleeve body 820 with the frustoconical sleeve bore 818.

In still yet another further example, as the core bolt 100, 400 becomes fully engaged with the nut member 610, the shank portion 108 of the core bolt 100, 400 is configured to cause radial expansion of the sleeve member 802 and the sleeve member 802 is configured to provide an interference fit within the joining bore 702 through the multiple substrates 602.

In another example, the fastener system 600, 800 also includes a thermoplastic polymer sealant 616 disposed within a cavity 822 between the nut member 610 and the blind side 608 of the workpiece 604. In a further example, the thermoplastic polymer sealant 616 provides electromagnetic energy protection to the workpiece 604.

In yet another example, the fastener system 600, 800 also includes a cap sealant member 618 with a dome and configured for placement over the nut member 610 on the blind side 608 of the workpiece 604. In a further example, the cap sealant member 618 provides electromagnetic energy protection to the workpiece 604.

Referring generally to Figs. 1A-C, 2A-C, 3A-B, 4A-B, 6, 7A-C and 8-15, by way of examples, the present disclosure is directed to a method 900, 1400, 1500 for joining multiple substrates 602 of a workpiece 604 with a working side 606 and a blind side 608. Fig. 1A shows an example of a core bolt for a fastener system for joining multiple substrates of a workpiece with working and blind sides. Fig. 1B shows a top view of the core bolt of Fig. 1A. Fig. 1C shows an example of an interface between a frangible drive element and a head portion of the core bolt of Fig. 1A. Fig. 2A shows a side view of the core bolt of Fig. 1A after the frangible drive element separates from the core head. Fig. 2B shows a top view of the core bolt of Fig. 1A after separation of the frangible drive element. Fig. 2C shows an example of the frangible drive element of Fig. 1A after separation from the head portion. Fig. 3A shows another example of a core bolt for a fastener system for joining multiple substrates of a workpiece with working and blind sides. Fig. 3B shows yet another example of a core bolt for a fastener system for joining multiple substrates of a workpiece with working and blind sides. Fig. 4A shows still another example of a core bolt for a fastener system for joining multiple substrates of a workpiece with working and blind sides. Fig. 4B shows a top view of the core bolt of Fig. 4A. Fig. 6 shows an example of a fastener system for joining multiple substrates of a workpiece with working and blind sides.

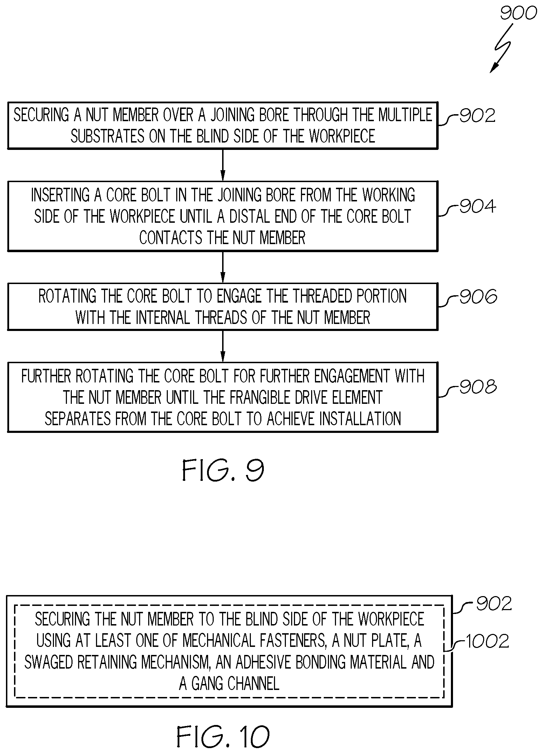

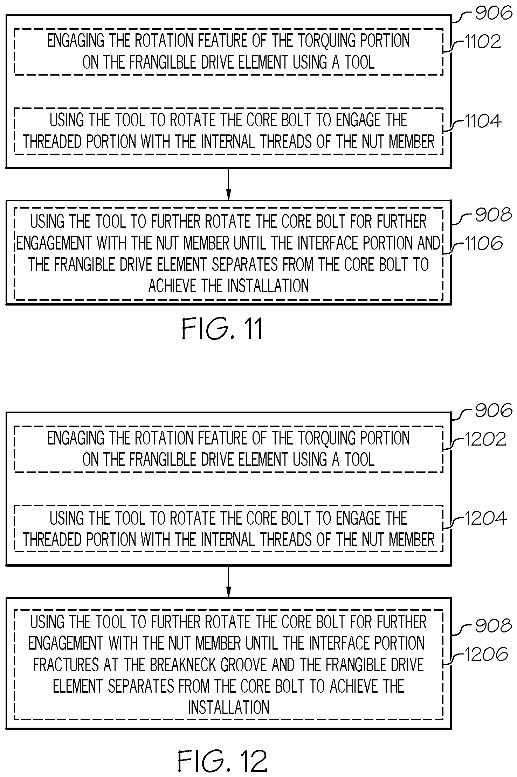

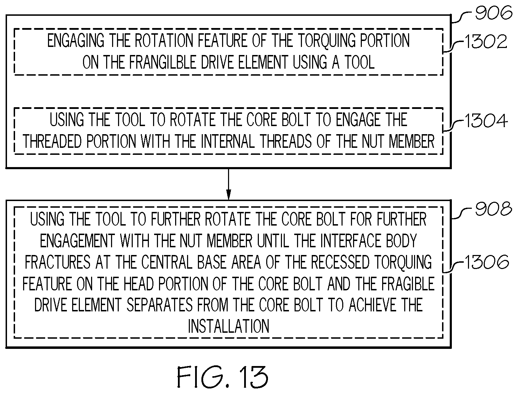

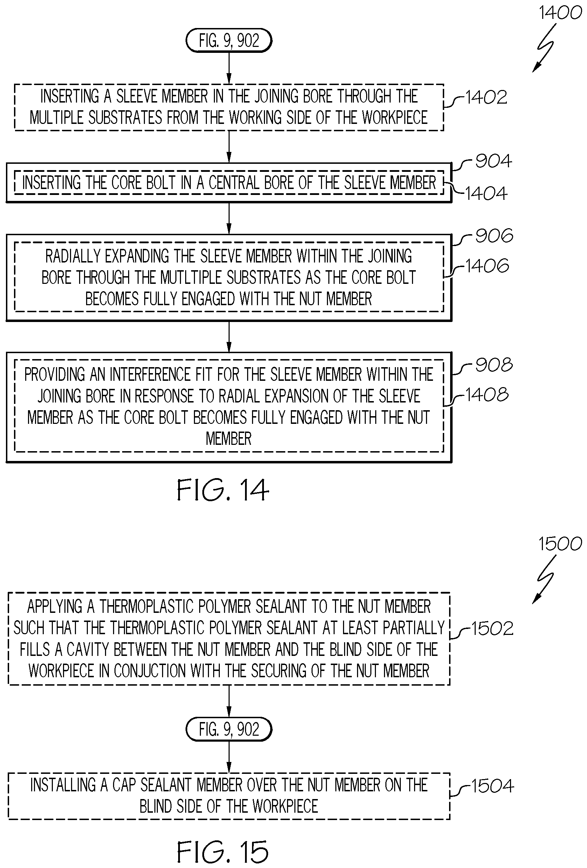

Fig. 7A shows an example of a joining bore through the multiple substrates of the workpiece with a countersink on the working side. Fig. 7B shows another example of a joining bore through the multiple substrates of the workpiece with a counterbore on the working side. Fig. 7C shows yet another example of a joining bore through the multiple substrates of the workpiece. Fig. 8 shows another example of a fastener system for joining multiple substrates of a workpiece with working and blind sides. Fig. 9 provides an example of the method 900 for joining multiple substrates 602 of a workpiece 604 with a working side 606 and a blind side 608. Fig. 10 provides an example of the securing 902 of the nut member 610 of Fig. 9. Fig. 11 provides examples of the rotating 906 of the core bolt 100, 400 and the further rotating 908 of the core bolt 100, 400 of Fig. 9. Fig. 12 provides additional examples of the rotating 906 of the core bolt 100, 400 and the further rotating 908 of the core bolt 100, 400 of Fig. 9. Fig. 13 provides further additional examples of the rotating 906 of the core bolt 100, 400 and the further rotating 908 of the core bolt 100, 400 of Fig. 9. Fig. 14, in combination with Fig. 9, provides an example of the method 1400 for joining multiple substrates 602 of a workpiece 604 with a working side 606 and a blind side 608. Fig. 15, in combination with Fig. 9, provides an example of the method 1500 method for joining multiple substrates 602 of a workpiece 604 with a working side 606 and a blind side 608.

With reference again to Figs. 1A-C, 2A-C, 3A-B, 4A-B, 6 , 7A-C, and 9-13, in one or more examples, a method 900 (see Fig. 9) for joining multiple substrates 602 of a workpiece 604 with a working side 606 and a blind side 608 includes securing 902 a nut member 610 over a joining bore 702 through the multiple substrates 602 on the blind side 608 of the workpiece 604, the nut member 610 comprising a nut bore 612 with internal threads 614. At 904, a core bolt 100, 400 is inserted in the joining bore 702 from the working side 606 of the workpiece 604 until a distal end 104 of the core bolt 100, 400 contacts the nut member 610. The core bolt 100, 400 includes a head portion 106 with a recessed torquing feature 202 and a shank portion 108 axially extending from the head portion 106 along a central longitudinal axis 110 to a distal end 104 of the core bolt 100, 400. The shank portion 108 includes a threaded portion 102 between the distal end 104 and the head portion 106. The core bolt 100, 400 also includes a frangible drive element 112, 412 extending from the head portion 106 and protruding outward along the central longitudinal axis 110 to define a proximal end 114 of the core bolt 100, 400. At 906, the core bolt 100, 400 is rotated to engage the threaded portion 102 with the internal threads 614 of the nut member 610. At 908, the core bolt 100, 400 is further rotated for further engagement with the nut member 610 until the frangible drive element 112, 412 separates from the core bolt 100, 400 to achieve installation.

In another example of the method 900, the securing 902 of the nut member 610 includes securing 1002 (see Fig. 10) the nut member 610 to the blind side 608 of the workpiece 604 using mechanical fasteners, a nut plate, a swaged retaining mechanism, an adhesive bonding material, a gang channel or any other suitable securing technique in any suitable combination. In yet another example of the method 900, after the frangible drive element 112, 412 separates from the from head portion 106, the recessed torquing feature 202 on the head portion 106 facilitates rotation of the core bolt 100, 400 for removal from the working side 606 of the workpiece 604 and subsequent replacement. In still another example of the method 900, the shank portion 108 of the core bolt 100, 400 includes a cylindrical body 302, a frustoconical body 304 or any other suitable shaped body in any suitable combination.

In still yet another example of the method 900, the frangible drive element 112, 412 of the core bolt 100, 400 extends from the head portion 106 at a central base area 116 of the recessed torquing feature 202 and is configured for engagement by a tool for at least one of the rotating 906 of the core bolt 100, 400 and the further rotating 908 of the core bolt 100, 400. In a further example, the tool includes an end effector on a robotic arm, a handheld power tool, a hand tool or any other suitable tool in any suitable combination. In another further example, the frangible drive element 112, 412 separates from the head portion 106 at the central base area 116 of the recessed torquing feature 202 in response to a predetermined torque being applied by the tool during the further rotating 908 of the core bolt 100, 400.

In another example of the method 900, the frangible drive element 112, 412 of the core bolt 100, 400 includes an interface portion 118, 418, a torquing portion 120, 420 and a stem portion 124, 424. The interface portion 118, 418 extends from the head portion 106 and protrudes outward. The torquing portion 120, 420 includes a rotation feature 122, 422 at the proximal end 114 of the core bolt 100, 400. The stem portion 124, 424 axially extends between the interface portion 118, 418 and the torquing portion 120, 420 along the central longitudinal axis 110 of the core bolt 100, 400. The stem portion 124, 424 opposes the rotation feature 122, 422 of the torquing portion 120, 420. In a further example, the interface portion 118, 418 of the frangible drive element 112, 412 extends from the head portion 106 at a central base area 116 of the recessed torquing feature 202.

In another further example of the method 900, the rotating 906 of the core bolt 100, 400 and the further rotating 908 of the core bolt 100, 400 include engaging 1102 (see Fig. 11) the rotation feature 122, 422 of the torquing portion 120, 420 on the frangible drive element 112, 412 using a tool. At 1104, the tool is used to rotate the core bolt 100, 400 to engage the threaded portion 102 of the shank portion 108 with the internal threads 614 of the nut member 610. At 1106, the tool is used to further rotate the core bolt 100, 400 for further engagement with the nut member 610 until the interface portion 118, 418 fractures and the frangible drive element 112, 412 separates from the core bolt 100, 400 to achieve the installation.

In yet another further example, the interface portion 118, 418 of the frangible drive element 112, 412 includes a breakneck groove 126 disposed proximate the head portion 106 at a central base area 116 of the recessed torquing feature 202. In this example of the method 900, the rotating 906 of the core bolt 100, 400 and the further rotating 908 of the core bolt 100, 400 include engaging 1202 (see Fig. 12) the rotation feature 122, 422 of the torquing portion 120, 420 on the frangible drive element 112, 412 using a tool. At 1204, the tool is used to rotate the core bolt 100, 400 to engage the threaded portion 102 of the shank portion 108 with the internal threads 614 of the nut member 610. At 1206, the tool is used to further rotate the core bolt 100, 400 for further engagement with the nut member 610 until the interface portion 118, 418 fractures at the breakneck groove 126 and the frangible drive element 112, 412 separates from the core bolt 100, 400 to achieve the installation.

In still another example, the interface portion 118, 418 of the frangible drive element 112, 412 includes an interface body 204 that tapers from the stem portion 124, 424 to the head portion 106 at a central base area 116 of the recessed torquing feature 202. In this example of the method 900, the rotating 906 of the core bolt 100, 400 and the further rotating 908 of the core bolt 100, 400 includes engaging 1302 (see Fig. 13) the rotation feature 122, 422 of the torquing portion 120, 420 on the frangible drive element 112, 412 using a tool. At 1304, the tool is used to rotate the core bolt 100, 400 to engage the threaded portion 102 of the shank portion 108 with the internal threads 614 of the nut member 610. At 1306, the tool is used to further rotate the core bolt 100, 400 for further engagement with the nut member 610 until the interface body 204 fractures at the central base area 116 of the recessed torquing feature 202 on the head portion 106 of the core bolt 100, 400 and the frangible drive element 112, 412 separates from the core bolt 100, 400 to achieve the installation.

With reference again to Figs. 1A-C, 4A-B, 6,7A-C, 8, 9, and 14, in one or more examples, a method 1400 (see Fig. 14) for joining multiple substrates 602 of a workpiece 604 with a working side 606 and a blind side 608 includes the method 900 of Fig. 9. The method 1400 continues from 902 to 1402 where a sleeve member 802 is inserted in the joining bore 702 through the multiple substrates 602 from the working side 606 of the workpiece 604. The sleeve member 802 includes an outer sleeve surface 804 with a lubricious coating. In method 1400, the inserting 904 of the core bolt 100, 400 includes inserting 1404 the core bolt 100, 400 in a central bore 806 of the sleeve member 802.

In another example of the method 1400, as the core bolt 100, 400 becomes fully engaged with the nut member 610, the rotating 906 of the core bolt 100, 400 includes radially expanding 1406 the sleeve member 802 within the joining bore 702 through the multiple substrates 602 as the core bolt 100, 400 becomes fully engaged with the nut member 610. In this example, the further rotating 908 of the core bolt 100, 400 includes providing 1408 an interference fit for the sleeve member 802 within the joining bore 702 in response to radial expansion of the sleeve member 802 as the core bolt 100, 400 becomes fully engaged with the nut member 610.

With reference again to Figs. 1A-C, 6, 8, 9, and 15, in one or more examples, a method 1500 (see Fig. 15) for joining multiple substrates 602 of a workpiece 604 with a working side 606 and a blind side 608 includes applying 1502 a thermoplastic polymer sealant 616 to the nut member 610 such that the thermoplastic polymer sealant 616 at least partially fills a cavity 822 between the nut member 610 and the blind side 608 of the workpiece 604 in conjunction with the securing 902 of the nut member 610. The method 1500 continues from 1502 to 902. In another example, the method 1500, continues from 902 to 1504 where a cap sealant member 618 is installed over the nut member 610 on the blind side 608 of the workpiece 604.

Examples of core bolts, fastener systems and methods for joining multiple substrates of workpieces with working and blind sides may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. Figs. 1A-C, 2A-C, 3A-B, 4A-B, 6 , 7A-C, and 8, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1A-C, 2A-C, 3A-B, 4A-B, 6 , 7A-C, and8, referred to above, need be included in every example and not all elements, features and/or components described herein are necessarily depicted in each illustrative example. Accordingly, some of the elements, features and/or components described and illustrated in Figs. 1A-C, 2A-C, 3A-B, 4A-B, 6 , 7A-C, and 8 may be combined in various ways without the need to include other features described and illustrated in Figs. 1A-C, 2A-C, 3A-B, 4A-B, 6 , 7A-C, and8, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1A-C, 2A-C, 3A-B, 4A-B, 6 , 7A-C, and 8, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1A-C, 2A-C, 3A-B, 4A-B, 6 , 7A-C, and 8 and such elements, features and/or components may not be discussed in detail herein with reference to each of Figs. 1A-C, 2A-C, 3A-B, 4A-B, 6 , 7A-C, and 8. Similarly, all elements, features and/or components may not be labeled in each of Figs. 1A-C, 2A-C, 3A-B, 4A-B, 6 , 7A-C, and 8, but reference numerals associated therewith may be utilized herein for consistency.

In Figs. 9-15, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 9-15 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

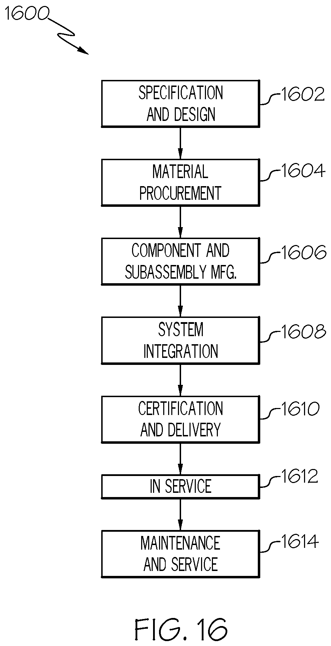

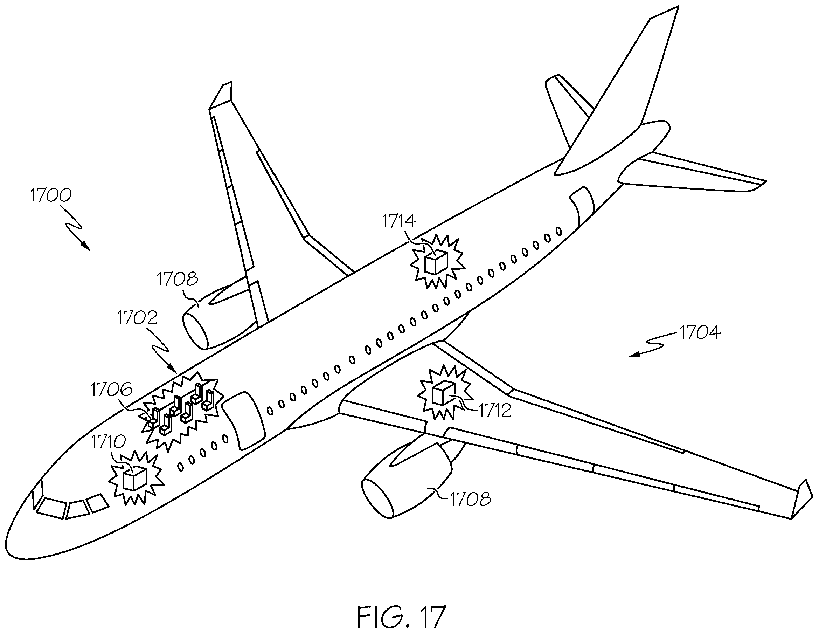

Examples of the subject matter disclosed herein may be described in the context of aircraft manufacturing and service method 1600 as shown in Fig. 16 and aircraft 1700 as shown in Fig. 17. In one or more examples, the disclosed methods and systems for associating test data for a part under test with an end item coordinate system may be used in aircraft manufacturing. During pre-production, the service method 1600 may include specification and design (block 1602) of aircraft 1700 and material procurement (block 1604). During production, component and subassembly manufacturing (block 1606) and system integration (block 1608) of aircraft 1700 may take place. Thereafter, aircraft 1700 may go through certification and delivery (block 1610) to be placed in service (block 1612). While in service, aircraft 1700 may be scheduled for routine maintenance and service (block 1614). Routine maintenance and service may include modification, reconfiguration, refurbishment, etc. of one or more systems of aircraft 1700.

Each of the processes of the service method 1600 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 17, aircraft 1700 produced by the service method 1600 may include airframe 1702 with a plurality of high-level systems 1704 and interior 1706. Examples of high-level systems 1704 include one or more of propulsion system 1708, electrical system 2160, hydraulic system 1712 and environmental system 1714. Any number of other systems may be included. Although an aerospace example is shown, the principles disclosed herein may be applied to other industries, such as the automotive industry. Accordingly, in addition to aircraft 1700, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 1600. For example, components or subassemblies corresponding to component and subassembly manufacturing (block 1606) may be fabricated or manufactured in a manner similar to components or subassemblies produced while aircraft 1700 is in service (block 1612). Also, one or more examples of the system(s), method(s), or combination thereof may be utilized during production stages (block 1606 and block 1608), for example, by substantially expediting assembly of or reducing the cost of aircraft 1700. Similarly, one or more examples of the system or method realizations, or a combination thereof, may be utilized, for example and without limitation, while aircraft 1700 is in service (block 1612) and/or during maintenance and service (block 1614).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the core bolt 100, 400 fastener system 600, 800 and methods 900, 1400, 1500 for joining multiple substrates 602 of a workpiece 604 with a working side 606 and a blind side 608 have been shown and described, modifications may occur to those skilled in the art upon reading the specification. The present application includes such modifications and is limited only by the scope of the claims.

The following numbered clauses are also disclosed:
1. A core bolt of a fastener system for joining multiple substrates of a workpiece with a working side and a blind side, the core bolt comprising:
   a head portion comprising a recessed torquing feature;
   a shank portion axially extending from the head portion along a central longitudinal axis to a distal end of the core bolt, the shank portion comprising a threaded portion between the distal end and the head portion; and
   a frangible drive element extending from recessed torquing feature of the head portion and protruding outward along the central longitudinal axis to define a proximal end of the core bolt.
2. The core bolt of Clause 1 wherein the core bolt comprises a metallic material.
3. The core bolt of Clause 2 wherein the metallic material comprises at least one of a stainless steel, titanium, a titanium alloy, a cobalt-chromium alloy and a nickel-titanium alloy.
4. The core bolt of any preceding Clause wherein the head portion comprises at least one of a flush head, a countersunk head, a protruding head and a raised head.
5. The core bolt of any preceding Clause wherein the recessed torquing feature of the head portion comprises at least one of a recessed offset cruciform drive feature, a recessed dovetail drive feature, a recessed cross-tip drive feature, a recessed hexagon key drive feature and a recessed flat tip drive feature.
6. The core bolt of any preceding Clause wherein, after the frangible drive element separates from the from head portion, the recessed torquing feature of the head portion facilitates rotation of the core bolt using at least one of an offset cruciform drive torquing tool, a dovetail drive torquing tool, a cross-tip drive torquing tool, a hexagon key torquing tool and a flat tip drive torquing tool.
7. The core bolt of any preceding Clause wherein the shank portion opposes the recessed torquing feature of the head portion.
8. The core bolt of any preceding Clause wherein the shank portion comprises at least one of a cylindrical body and a frustoconical body.
9. The core bolt of any preceding Clause wherein the frangible drive element extends from the head portion at a central base area of the recessed torquing feature and is configured for engagement by a tool for installation of the core bolt.
10. The core bolt of Clause 9 wherein the tool comprises at least one of an end effector on a robotic arm, a handheld power tool and a hand tool.
11. The core bolt of Clause 9 or 10wherein the frangible drive element is separable from the head portion at the central base area of the recessed torquing feature in response to a predetermined torque being applied by the tool during the installation of the core bolt.
12. The core bolt of Clause 11 wherein the predetermined torque is based at least in part on at least one of a diameter of the core bolt, a finish coat on internal threads of a nut member into which the core bolt is to be installed, a friction level for the internal threads of the nut member, a friction level between the shank portion of the core bolt and a joining bore through the multiple substrates into which the core bolt is to be installed, a friction level between the shank portion of the core bolt and a sleeve member into which the core bolt is to be inserted, an effect of lubricants on frictions encountered by the core bolt during installation and a preload tension within the core bolt at the proximal end of the frangible drive element.
13. The core bolt of any preceding Clause, the frangible drive element comprising:
   an interface portion extending from the head portion and protruding outward;
   a torquing portion comprising a rotation feature at the proximal end of the core bolt; and
   a stem portion axially extending between the interface portion and the torquing portion along the central longitudinal axis of the core bolt.
14. The core bolt of Clause 13 wherein the interface portion of the frangible drive element extends from the head portion at a central base area of the recessed torquing feature.
15. The core bolt of Clause 13 or 14 wherein the rotation feature of the torquing portion comprises at least one of a recessed spline drive feature, a recessed star drive feature, a recessed square-lobed star drive feature, a recessed 6-point star drive feature, a recessed 6-point square-lobed star drive feature, an opposing flat surface head feature, a recessed hexagon key drive feature, a hexagon head feature, a recessed cross-tip drive feature and a recessed flat tip drive feature.
16. The core bolt of any of Clauses 13 to 15wherein the rotation feature of the torquing portion facilitates rotation of the core bolt using at least one of a spline drive torquing tool, a star drive torquing tool, a square-lobed star drive torquing tool, a 6-point star drive torquing tool, a 6-point square-lobed star drive torquing tool, an opposing flat surface socket torquing tool, a hexagon key torquing tool, a hexagon socket torquing tool, a cross-tip drive torquing tool and a flat tip drive torquing tool.
17. The core bolt of any of Clauses 13 to 16 wherein the stem portion opposes the rotation feature of the torquing portion.
18. The core bolt of any of Clauses 13 to 17 wherein the stem portion comprises at least one of an elongated cylindrical shape, an elongated hexagonal shape and an elongated shape with multiple facets.
19. The core bolt of any of Clauses 13 to 18, the interface portion defining a breakneck groove disposed proximate the head portion at a central base area of the recessed torquing feature to facilitate separation of the frangible drive element from the core bolt in response to a predetermined torque being applied at the torquing portion during installation of the core bolt.
20. The core bolt of any of Clauses 13 to 19, the interface portion comprising:
   an interface body that tapers from the stem portion to the head portion at a central base area of the recessed torquing feature to facilitate separation of the frangible drive element from the core bolt in response to a predetermined torque being applied at the torquing portion during installation of the core bolt.
21. The core bolt of Clause 20, the interface body defining a breakneck groove disposed proximate the head portion at a central base area of the recessed torquing feature to further facilitate separation of the frangible drive element from the core bolt in response to the predetermined torque being applied at the torquing portion during the installation of the core bolt.
22. A fastener system for joining multiple substrates of a workpiece with a working side and a blind side, the fastener system comprising:
   a nut member comprising a nut bore with internal threads; and
   a core bolt comprising:
      a head portion comprising a recessed torquing feature;
      a shank portion axially extending from the head portion along a central longitudinal axis to a distal end of the core bolt, the shank portion comprising a threaded portion between the distal end and the head portion; and
      a frangible drive element extending from the head portion and protruding outward along the central longitudinal axis to define a proximal end of the core bolt.
23. The fastener system of Clause 22 wherein the multiple substrates comprise at least one composite material substrate.
24. The fastener system of Clause 22 or 23 wherein, at the working side of the workpiece, a joining bore through the multiple substrates comprises at least one of a countersunk portion, a counterbored portion and a cylindrical portion.
25. The fastener system of any of Clauses 22 to 24 wherein the nut member is configured for placement of the nut bore over a joining bore through the multiple substrates on the blind side of the workpiece.
26. The fastener system of any of Clauses 22 to 25 wherein the nut member is configured to be secured to the blind side of the workpiece.
27. The fastener system of Clause 26 wherein the nut member is configured to be secured using at least one of mechanical fasteners, a nut plate, a swaged retaining mechanism, an adhesive bonding material and a gang channel.
28. The fastener system of any of Clauses 22 to 27 wherein the core bolt is configured for insertion in a joining bore through the multiple substrates from the working side of the workpiece.
29. The fastener system of any of Clauses 22 to 28 wherein the threaded portion of the shank portion of the core bolt is configured for threaded engagement with the internal threads of the nut member.
30. The fastener system of any of Clauses 22 to 29 wherein the head portion of the core bolt comprises at least one of a flush head, a countersunk head, a protruding head and a raised head.
31. The fastener system of any of Clauses 22 to 30 wherein the recessed torquing feature on the head portion of the core bolt comprises at least one of a recessed offset cruciform drive feature, a recessed dovetail drive feature, a recessed cross-tip drive feature, a recessed hexagon key drive feature and a recessed flat tip drive feature.
32. The fastener system of any of Clauses 22 to 31 wherein, after the frangible drive element of the core bolt separates from the from head portion, the recessed torquing feature of the head portion facilitates rotation of the core bolt using at least one of an offset cruciform drive torquing tool, a dovetail drive torquing tool, a cross-tip drive torquing tool, a hexagon key torquing tool and a flat tip drive torquing tool.
33. The fastener system of any of Clauses 22 to 32 wherein the shank portion of the core bolt opposes the recessed torquing feature of the head portion.
34. The fastener system of any of Clauses 22 to 33 wherein the shank portion of the core bolt comprises at least one of a cylindrical body and a frustoconical body.
35. The fastener system of any of Clauses 22 to 34 wherein the frangible drive element of the core bolt extends from the head portion at a central base area of the recessed torquing feature and is configured for engagement by a tool for installation of the core bolt.
36. The fastener system of Clause 35 wherein the tool comprises at least one of an end effector on a robotic arm, a handheld power tool and a hand tool.
37. The fastener system of Clause 35 or 36 wherein the frangible drive element is separable from the head portion at the central base area of the recessed torquing feature in response to a predetermined torque being applied by the tool during the installation of the core bolt.
38. The fastener system of any of Clauses 22 to 37, the frangible drive element of the core bolt comprising:
   an interface portion extending from the head portion and protruding outward;
   a torquing portion comprising a rotation feature at the proximal end of the core bolt; and
   a stem portion axially extending between the interface portion and the torquing portion along the central longitudinal axis of the core bolt.
39. The fastener system of Clause 38 wherein the interface portion of the frangible drive element extends from the head portion at a central base area of the recessed torquing feature.
40. The fastener system of Clause 38 or 39 wherein the rotation feature of the torquing portion comprises at least one of a recessed spline drive feature, a recessed star drive feature, a recessed square-lobed star drive feature, a recessed 6-point star drive feature, a recessed 6-point square-lobed star drive feature, an opposing flat surface head feature, a recessed hexagon key drive feature, a hexagon head feature, a recessed cross-tip drive feature and a recessed flat tip drive feature.
41. The fastener system of any of Clauses 38 to 40 to wherein the rotation feature of the torquing portion facilitates rotation of the core bolt using at least one of a spline drive torquing tool, a star drive torquing tool, a square-lobed star drive torquing tool, a 6-point star drive torquing tool, a 6-point square-lobed star drive torquing tool, an opposing flat surface socket torquing tool, a hexagon key torquing tool, a hexagon socket torquing tool, a cross-tip drive torquing tool and a flat tip drive torquing tool.
42. The fastener system of any of Clauses 38 to 41 wherein the stem portion of the frangible drive element opposes the rotation feature of the torquing portion.
43. The fastener system of any of Clauses 38 to 42 wherein the stem portion of the frangible drive element comprises at least one of an elongated cylindrical shape, an elongated hexagonal shape and an elongated shape with multiple facets.
44. The fastener system of any of Clauses 38 to 43, the interface portion of the frangible drive element defining a breakneck groove disposed proximate the head portion at a central base area of the recessed torquing feature to facilitate separation of the frangible drive element from the core bolt in response to a predetermined torque being applied at the torquing portion during installation of the core bolt.
45. The fastener system of any of Clauses 38 to 44, the interface portion of the frangible drive element comprising:
   an interface body that tapers from the stem portion to the head portion at a central base area of the recessed torquing feature to facilitate separation of the frangible drive element from the core bolt in response to a predetermined torque being applied at the torquing portion during installation of the core bolt.
46. The fastener system of Clause 45, the interface body defining a breakneck groove disposed proximate the head portion at a central base area of the recessed torquing feature to further facilitate separation of the frangible drive element from the core bolt in response to the predetermined torque being applied at the torquing portion during the installation of the core bolt.
47. The fastener system of any of Clauses 22 to 46, further comprising:
   a sleeve member comprising an outer sleeve surface with a lubricious coating, the sleeve member configured for insertion in a joining bore through the multiple substrates from the working side of the workpiece, wherein the core bolt is configured for insertion in a central bore of the sleeve member.
48. The fastener system of Clause 47 wherein the lubricious coating on the outer sleeve surface of the sleeve member comprises conductive features configured to provide electromagnetic energy protection to the workpiece.
49. The fastener system of Clause 47 or 48 wherein the outer sleeve surface of the sleeve member is coated with a conductive coating to provide electromagnetic energy protection to the workpiece.
50. The fastener system of any of Clauses 47 to 49, the sleeve member further comprising an inner sleeve surface and the shank portion of the core bolt comprising an outer shank surface, wherein at least one of the inner sleeve surface and the outer shank surface is coated with the lubricious coating.
51. The fastener system of any of Clauses 47 to 50, the sleeve member further comprising:
   an elongated sleeve body defining the central bore, the elongated sleeve body comprising the outer sleeve surface, an inner sleeve surface facing the central bore, a first end relating to the working side of the workpiece and a second end relating to the blind side of the workpiece, and
   wherein at least the inner sleeve surface is tapered from a larger inner sleeve diameter proximate the first end to a smaller inner sleeve diameter proximate the second end such that the central bore comprises a frustoconical sleeve bore.
52. The fastener system of Clause 51 wherein the outer sleeve surface of the sleeve member is cylindrical such that the elongated sleeve body comprises a cylindrical sleeve body with the frustoconical sleeve bore.
53. The fastener system of any of Clauses 47 to 52 wherein, as the core bolt becomes fully engaged with the nut member, the shank portion of the core bolt is configured to cause radial expansion of the sleeve member and the sleeve member is configured to provide an interference fit within the joining bore through the multiple substrates.
54. The fastener system of any of Clauses 22 to 53, further comprising:
   a thermoplastic polymer sealant disposed within a cavity between the nut member and the blind side of the workpiece.
55. The fastener system of Clause 54 wherein the thermoplastic polymer sealant provides electromagnetic energy protection to the workpiece.
56. The fastener system of any of Clauses 22 to 55, further comprising:
   a cap sealant member comprising a dome and configured for placement over the nut member on the blind side of the workpiece.
57. The fastener system of Clause 56 wherein the cap sealant member provides electromagnetic energy protection to the workpiece.
58. A method for joining multiple substrates of a workpiece with a working side and a blind side, the method comprising:
   securing a nut member over a joining bore through the multiple substrates on the blind side of the workpiece, the nut member comprising a nut bore with internal threads;
   inserting a core bolt in the joining bore from the working side of the workpiece until a distal end of the core bolt contacts the nut member, the core bolt comprising a head portion with a recessed torquing feature and a shank portion axially extending from the head portion along a central longitudinal axis to a distal end of the core bolt, the shank portion comprising a threaded portion between the distal end and the head portion, the core bolt further comprising a frangible drive element extending from the head portion and protruding outward along the central longitudinal axis to define a proximal end of the core bolt;
   rotating the core bolt to engage the threaded portion with the internal threads of the nut member; and
   further rotating the core bolt for further engagement with the nut member until the frangible drive element separates from the core bolt to achieve installation.
59. The method of Clause 58, the securing of the nut member comprising:
   securing the nut member to the blind side of the workpiece using at least one of mechanical fasteners, a nut plate, a swaged retaining mechanism, an adhesive bonding material and a gang channel.
60. The method of Clause 58 or 59 wherein, after the frangible drive element separates from the from head portion, the recessed torquing feature on the head portion facilitates rotation of the core bolt for removal from the working side of the workpiece and subsequent replacement.
61. The method of any of Clauses 58 to 60 wherein the shank portion of the core bolt comprises at least one of a cylindrical body and a frustoconical body.
62. The method of any of Clauses 58 to 61 wherein the frangible drive element of the core bolt extends from the head portion at a central base area of the recessed torquing feature and is configured for engagement by a tool for at least one of the rotating of the core bolt and the further rotating of the core bolt.
63. The method of Clause 62 wherein the tool comprises at least one of an end effector on a robotic arm, a handheld power tool and a hand tool.
64. The method of Clause 62 or 63 wherein the frangible drive element separates from the head portion at the central base area of the recessed torquing feature in response to a predetermined torque being applied by the tool during the further rotating of the core bolt.
65. The method of any of Clauses 58 to 64 wherein the frangible drive element of the core bolt comprises:
   an interface portion extending from the head portion and protruding outward;
   a torquing portion comprising a rotation feature at the proximal end of the core bolt; and
   a stem portion axially extending between the interface portion and the torquing portion along the central longitudinal axis of the core bolt, the stem portion opposing the rotation feature of the torquing portion.
66. The method of Clause 65 wherein the interface portion of the frangible drive element extends from the head portion at a central base area of the recessed torquing feature.
67. The method of Clause 65 or 66, the rotating of the core bolt and the further rotating of the core bolt comprising:
   engaging the rotation feature of the torquing portion on the frangible drive element using a tool;
   using the tool to rotate the core bolt to engage the threaded portion of the shank portion with the internal threads of the nut member; and
   using the tool to further rotate the core bolt for further engagement with the nut member until the interface portion fractures and the frangible drive element separates from the core bolt to achieve the installation.
68. The method of any of Clauses 65 to 67, wherein the interface portion of the frangible drive element defines a breakneck groove disposed proximate the head portion at a central base area of the recessed torquing feature, the rotating of the core bolt and the further rotating of the core bolt comprising:
   engaging the rotation feature of the torquing portion on the frangible drive element using a tool;
   using the tool to rotate the core bolt to engage the threaded portion of the shank portion with the internal threads of the nut member; and
   using the tool to further rotate the core bolt for further engagement with the nut member until the interface portion fractures at the breakneck groove and the frangible drive element separates from the core bolt to achieve the installation.
69. The method of Clause 65 wherein the interface portion of the frangible drive element comprises an interface body that tapers from the stem portion to the head portion at a central base area of the recessed torquing feature, the rotating of the core bolt and the further rotating of the core bolt comprising:
   engaging the rotation feature of the torquing portion on the frangible drive element using a tool;
   using the tool to rotate the core bolt to engage the threaded portion of the shank portion with the internal threads of the nut member; and
   using the tool to further rotate the core bolt for further engagement with the nut member until the interface body fractures at the central base area of the recessed torquing feature on the head portion of the core bolt and the frangible drive element separates from the core bolt to achieve the installation.
70. The method of any of Clauses 58 to 69, further comprising:
   inserting a sleeve member in the joining bore through the multiple substrates from the working side of the workpiece, the sleeve member comprising an outer sleeve surface with a lubricious coating; and
   inserting the core bolt in a central bore of the sleeve member.
71. The method of Clause 70 wherein, as the core bolt becomes fully engaged with the nut member, the method further comprising:
   radially expanding the sleeve member within the joining bore through the multiple substrates as the core bolt becomes fully engaged with the nut member; and
   providing an interference fit for the sleeve member within the joining bore in response to radial expansion of the sleeve member as the core bolt becomes fully engaged with the nut member.
72. The method of any of Clauses 58 to 71, further comprising:
   applying a thermoplastic polymer sealant to the nut member such that the thermoplastic polymer sealant at least partially fills a cavity between the nut member and the blind side of the workpiece in conjunction with the securing of the nut member.
73. The method of any of Clauses 58 to 72, further comprising:
   installing a cap sealant member over the nut member on the blind side of the workpiece.

## Claims

1. A fastener system (600, 800) for joining multiple substrates (602) of a workpiece (604) with a working side (606) and a blind side (608), the fastener system comprising:
a nut member (610) comprising a nut bore (612) with internal threads (614); and
a core bolt (100, 400) comprising:
a head portion (106) comprising a recessed torquing feature (202);
a shank portion (108) axially extending from the head portion (106) along a central longitudinal axis (110) to a distal end (104) of the core bolt (100, 400), the shank portion (108) comprising a threaded portion (102) between the distal end (104) and the head portion (106); and
a frangible drive element (112, 412) extending from the head portion (106) and protruding outward along the central longitudinal axis (110) to define a proximal end (114) of the core bolt (100, 400).

2. The fastener system of Claim 1 wherein the nut member (610) is configured for placement of the nut bore (612) over a joining bore (702) through the multiple substrates (602) on the blind side (608) of the workpiece (604).

3. The fastener system of Claim 1 wherein the nut member (610) is configured to be secured to the blind side (608) of the workpiece (604).

4. The fastener system of any preceding Claim wherein the core bolt (100, 400) is configured for insertion in a joining bore (702) through the multiple substrates (602) from the working side (606) of the workpiece (604).

5. The fastener system of any preceding Claim wherein, after the frangible drive element (112, 412) of the core bolt (100, 400) separates from the from head portion (106), the recessed torquing feature (202) of the head portion (106) facilitates rotation of the core bolt (100, 400) using at least one of an offset cruciform drive torquing tool, a dovetail drive torquing tool, a cross-tip drive torquing tool, a hexagon key torquing tool and a flat tip drive torquing tool.

6. The fastener system of any preceding Claim wherein the frangible drive element (112, 412) of the core bolt (100, 400) extends from the head portion (106) at a central base area (116) of the recessed torquing feature (202) and is configured for engagement by a tool for installation of the core bolt (100, 400).

7. The fastener system of any preceding Claim, the frangible drive element (112, 412) of the core bolt (100, 400) comprising:
an interface portion (118, 418) extending from the head portion (106) and protruding outward;
a torquing portion (120, 420) comprising a rotation feature (122, 422) at the proximal end (114) of the core bolt (100, 400); and
a stem portion (124, 424) axially extending between the interface portion (118, 418) and the torquing portion (120, 420) along the central longitudinal axis (110) of the core bolt (100, 400).

8. The fastener system of Claim 7 wherein the rotation feature (122, 422) of the torquing portion (120, 420) comprises at least one of a recessed spline drive feature, a recessed star drive feature, a recessed square-lobed star drive feature, a recessed 6-point star drive feature, a recessed 6-point square-lobed star drive feature, an opposing flat surface head feature, a recessed hexagon key drive feature, a hexagon head feature, a recessed cross-tip drive feature and a recessed flat tip drive feature.

9. A method (900) for joining multiple substrates (602) of a workpiece (604) with a working side (606) and a blind side (608), the method comprising:
securing (902) a nut member (610) over a joining bore (702) through the multiple substrates (602) on the blind side (608) of the workpiece (604), the nut member (610) comprising a nut bore (612) with internal threads (614);
inserting (904) a core bolt (100, 400) in the joining bore (702) from the working side (606) of the workpiece (604) until a distal end (104) of the core bolt (100, 400) contacts the nut member (610), the core bolt (100, 400) comprising a head portion (106) with a recessed torquing feature (202) and a shank portion (108) axially extending from the head portion (106) along a central longitudinal axis (110) to a distal end (104) of the core bolt (100, 400), the shank portion (108) comprising a threaded portion (102) between the distal end (104) and the head portion (106), the core bolt (100, 400) further comprising a frangible drive element (112, 412) extending from the head portion (106) and protruding outward along the central longitudinal axis (110) to define a proximal end (114) of the core bolt (100, 400);
rotating (906) the core bolt (100, 400) to engage the threaded portion (102) with the internal threads (614) of the nut member (610); and
further rotating (908) the core bolt (100, 400) for further engagement with the nut member (610) until the frangible drive element (112, 412) separates from the core bolt (100, 400) to achieve installation.

10. The method of Claim 9 wherein, after the frangible drive element (112, 412) separates from the from head portion (106), the recessed torquing feature (202) on the head portion (106) facilitates rotation of the core bolt (100, 400) for removal from the working side (606) of the workpiece (604) and subsequent replacement.

11. The method of Claim 9 or 10 wherein the frangible drive element (112, 412) of the core bolt (100, 400) extends from the head portion (106) at a central base area (116) of the recessed torquing feature (202) and is configured for engagement by a tool for at least one of the rotating (906) of the core bolt (100, 400) and the further rotating (908) of the core bolt (100, 400).

12. The method of Claim 11 wherein the frangible drive element (112, 412) separates from the head portion (106) at the central base area (116) of the recessed torquing feature (202) in response to a predetermined torque being applied by the tool during the further rotating (908) of the core bolt (100, 400).

13. The method of any of Claims 9 to 11 wherein the frangible drive element (112, 412) of the core bolt (100, 400) comprises:
an interface portion (118, 418) extending from the head portion (106) and protruding outward;
a torquing portion (120, 420) comprising a rotation feature (122, 422) at the proximal end (114) of the core bolt (100, 400); and
a stem portion (124, 424) axially extending between the interface portion (118, 418) and the torquing portion (120, 420) along the central longitudinal axis (110) of the core bolt (100, 400), the stem portion (124, 424) opposing the rotation feature (122, 422) of the torquing portion (120, 420).

14. The method of Claim 13, the rotating (906) of the core bolt (100, 400) and the further rotating (908) of the core bolt (100, 400) comprising:
engaging (1102) the rotation feature (122, 422) of the torquing portion (120, 420) on the frangible drive element (112, 412) using a tool;
using (1104) the tool to rotate the core bolt (100, 400) to engage the threaded portion (102) of the shank portion (108) with the internal threads (614) of the nut member (610); and
using (1106) the tool to further rotate the core bolt (100, 400) for further engagement with the nut member (610) until the interface portion (118, 418) fractures and the frangible drive element (112, 412) separates from the core bolt (100, 400) to achieve the installation.

15. The method of Claim 13, wherein the interface portion (118, 418) of the frangible drive element (112, 412) defines a breakneck groove (126) disposed proximate the head portion (106) at a central base area (116) of the recessed torquing feature (202), the rotating (906) of the core bolt (100, 400) and the further rotating (908) of the core bolt (100, 400) comprising:
engaging (1202) the rotation feature (122, 422) of the torquing portion (120, 420) on the frangible drive element (112, 412) using a tool;
using (1204) the tool to rotate the core bolt (100, 400) to engage the threaded portion (102) of the shank portion (108) with the internal threads (614) of the nut member (610); and
using (1206) the tool to further rotate the core bolt (100, 400) for further engagement with the nut member (610) until the interface portion (118, 418) fractures at the breakneck groove (126) and the frangible drive element (112, 412) separates from the core bolt (100, 400) to achieve the installation.
